(19) Europäisches Patentamt
European Patent Office
Office européen des brevets

(11) EP 2 055 383 B1

(12) **EUROPÄISCHE PATENTSCHRIFT**

(45) Veröffentlichungstag und Bekanntmachung des Hinweises auf die Patenterteilung:
**22.12.2010 Patentblatt 2010/51**

(21) Anmeldenummer: **08166680.2**

(22) Anmeldetag: **15.10.2008**

(51) Int Cl.:
***B01J 43/00*** *(2006.01)*

(54) **Verwendung amphoterer Ionenaustauscher**

Use of amphoteric ion exchangers

Utilisation d'échangeurs ioniques amphotères

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007 DE 102007050833**

(43) Veröffentlichungstag der Anmeldung:
**06.05.2009 Patentblatt 2009/19**

(73) Patentinhaber: **LANXESS Deutschland GmbH**
**51369 Leverkusen (DE)**

(72) Erfinder:
- **Klipper, Reinhold**
  **50933 Köln (DE)**
- **Soest, Hans-Karl**
  **51147 Köln (DE)**
- **Litzinger, Ulrich**
  **57627 Hachenburg (DE)**
- **Schelhaas, Michael**
  **50733 Köln (DE)**
- **Martin, Georg**
  **40764 Langenfeld (DE)**

(56) Entgegenhaltungen:
**EP-A- 1 078 688** **DE-A1- 10 353 534**
**US-A- 4 232 125**

- **DATABASE CA [Online] CHEMICAL ABSTRACTS SERVICE, COLUMBUS, OHIO, US; KHALIKOVA, V. K. ET AL: "Amphoteric ion exchangers produced from poly(vinylbenzylphthalimide) and some of their properties" XP002511658 gefunden im STN Database accession no. 1988:151428 & IZVESTIYA AKADEMII NAUK KAZAKHSKOI SSR, SERIYA KHIMICHESKAYA , (1), 67-71 CODEN: IKAKAK; ISSN: 0002-3205, 1988,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 055 383 B1

**Beschreibung**

Die vorliegende Erfindung begrifft die Verwendung amphoterer Ionenaustauscher, die sowohl Phthalamidgruppen der Formel (I)

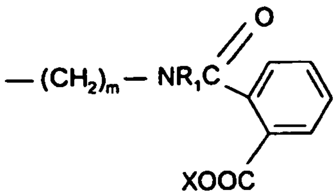

(I)

als auch $-(CH_2)_mNR_1R_2$-Gruppen und/oder gegebenenfalls $-(CH_2)_mNR_1R_2R_3$-Gruppen aufweisen, wobei m für eine ganze Zahl von 1 bis 4 steht und $R_1$, $R_2$, $R_3$ jeweils unabhängig voneinander für Wasserstoff, $-CH_3$, $-CH_2CH_3$, $-CH_2CH_2CH_3$, Benzyl, $-OCH_2CH_3$ oder $CH_2CH_2OH$ stehen und X für H oder Na oder K steht, zur Abtrennung von organischen Carbonsäuren der Reihe Zitronensäure, Milchsäure oder Weinsäure aus Fermentationsbrühen.

Prinzipiell zeichnen sich amphotere Ionenaustauscher dadurch aus, dass sie nebeneinander saure und basische funktionelle Gruppen enthalten. Verfahren zu deren Herstellung werden in Helfferich Ionenaustauscher, Band 1 Seite 52, Verlag Chemie, Weinheim oder bei Bolto, Pawlowski, Wastewater Treatment, Spon, London, 1986, Seite 5 beschrieben.

Stach, Angewandte Chemie, 63, 263, 1951 beschreibt amphotere Ionenaustauscher, die nebeneinander stark basische und stark saure Gruppen enthalten. Hergestellt werden diese amphoteren Ionenaustauscher durch Mischpolymerisation von Styrol, Vinylchlorid und einem Vernetzer wie beispielsweise Divinylbenzol gefolgt von Quaternierung und Sulfonierung.

In der DE-A 10353534 werden amphotere Ionenaustauscher beschrieben, die nebeneinander sowohl schwach saure als auch schwach basische Gruppen enthalten. Als schwach basische Gruppen werden primäre Aminogruppen genannt, als schwach saure Gruppen werden Acrylsäure und Alkyl($C_1$ - $C_4$)acrylsäuregruppen, wie beispielsweise Methacrylsäure genannt.

US A-4,232,125 und EP-A 1 078 688 beschreiben die Herstellung von aminoalkyliertem Polymer nach dem Phthalimidverfahren.

Allen genannten amphoteren Ionenaustauschern ist gemeinsam, dass sie für komplexe Trennverfahren, insbesondere für chromatographische Trennverfahren, wenig geeignet sind. Ihre langsame Kinetik, geringe Selektivität und Trennleistung sind dafür in aller Regel nicht ausreichend.

Die Aufgabe der vorliegenden Erfindung bestand deshalb darin, neue amphotere Ionenaustauscher zu entwickeln, die eine gute Trennleistung, ausreichend schnelle Kinetik und hohe Selektivität sowie Stabilität insbesondere bei der Abtrennung von organischen Carbonsäuren der Reihe Zitronensäure, Milchsäure oder Weinsäure aus Fermentationsbrühen zeigen.

Gegenstand der vorliegenden Anmeldung ist die Verwendung amphoterer Ionenaustauscher die sowohl Phthalamidgruppen der Formel (I)

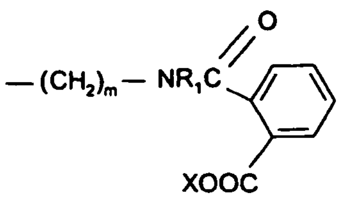

(I)

als auch $-(CH_2)_mNR_1R_2$-Gruppen und/oder gegebenenfalls $-(CH_2)_mNR_1R_2R_3$-Gruppen aufweisen, wobei m für eine ganze Zahl von 1 bis 4 steht, $R_1$, $R_2$, $R_3$ jeweils unabhängig voneinander für Wasserstoff, $-CH_3$, $-CH_2CH_3$, $-CH_2CH_2CH_3$, Benzyl , $-OCH_2CH_3$ oder $-CH_2CH_2OH$ stehen und X für H oder Na oder K steht, zur Abtrennung von organischen Carbonsäuren der Reihe Zitronensäure, Milchsäure oder Weinsäure aus Fermentationsbrühen.

Die erfindungsgemäß einzusetzenden amphoteren Ionenaustauscher, die sowohl Phthalamidsäuregruppen der Formel (I) als auch $-(CH_2)_mNR_1R_2$-Gruppen und/oder gegebenenfalls $-(CH_2)_mNR_1R_2R_3$-Gruppen enthalten, worin m, $R_1$, $R_2$, $R_3$ und X die oben genannten Bedeutungen haben, erhält man indem man

a) Monomertröpfchen aus einem Gemisch aus wenigstens einer monovinylaromatischen Verbindung, wenigstens einer polyvinylaromatischen Verbindung, einem Initiator oder einer Initiator-Kombination sowie gegebenenfalls einem Porogen zu einem vernetzten Perlpolymerisat umsetzt,

b) das erhaltene, vernetzte Perlpolymerisat mit Phthalimidderivaten amidomethyliert,

c) das phthalimidomethylierte Perlpolymerisat mit einer unterstöchiometrischen Menge an Verseifungsreagenzien umsetzt und gegebenenfalls isoliert oder gegebenenfalls

d) den amphoteren Ionenaustauscher aus Schritt c), der sowohl Phthalamidsäuregruppen der Formel (I) als auch $-(CH_2)_mNR_1R_2$-Gruppen enthält, mit Alkylierungsmitteln oder Hydroxyalkylierungsmitteln umsetzt und isoliert.

Die auf diese Weise erhaltenen amphoteren Ionenaustauscher enthalten als saure Gruppe die Phthalamidsäuregruppe der Formel (I) und als basische Gruppen primäre, sekundäre, tertiäre, quartäre Amino- bzw. Ammonium-Gruppen. Erfindungsgemäß bevorzugt enthalten die erfindungsgemäßen amphoteren Ionenaustauscher primäre Aminogruppen als basische Gruppen. Ohne den Verfahrensschritt d) erhält man in einer alternativ bevorzugten Ausführungsform der vorliegenden Erfindung nicht alkylierte amophotere Ionenaustauscher die sowohl Phthalamidgruppen der Formel (I) als auch $-(CH_2)_mNR_1R_2$-Gruppen und/oder gegebenenfalls - $(CH_2)_mNR_1R_2R_3$-Gruppen aufweisen, worin m für eine ganze Zahl von 1 bis 4 steht, X für H oder K oder Na steht und $R_1$, $R_2$ und $R_3$ jeweils nur für Wasserstoff stehen.

Angesichts des Standes der Technik war es überraschend, dass diese amphoteren Ionenaustauscher eine gegenüber dem Stand der Technik (US-A 7,241,918 oder US-A 5,068,419), bei dem Anionenaustauscher mit schwach oder stark basischen Gruppen eingesetzt werden, deutlich verbesserte Trennleistung von organischen Carbonsäuren die Reihe Zitronensäure, Milchsäure oder Weinsäure aus Fermentationsbrühen zeigen.

Ferner können die amphoteren Ionenaustauscher in Ion Retardation Prozessen eingesetzt werden - siehe Bolto, Pawlowski, Wastewater treatment by Ion Exchange Seiten 51 ff, Spon, New York 1987.

Die amphoteren Ionenaustauscher können sowohl eine heterodisperse als auch eine monodisperse Teilchengrößenverteilung aufweisen. Erfindungsgemäß bevorzugt werden monodisperse amphotere Ionenaustauscher eingesetzt. Ihre Teilchengröße beträgt im Allgemeinen 250 bis 1250 μm, bevorzugt 280 - 600 μm.

Als monodispers werden in der vorliegenden Anmeldung solche Ionenaustauscher bzw. deren Vorstufe die Perlpolymerisate bezeichnet, bei denen der Gleichheitskoeffizient der Verteilungskurve kleiner oder gleich 1,2 ist. Als Gleichheitskoeffizient wird der Quotient aus den Größen d60 und d10 bezeichnet. D60 beschreibt den Durchmesser, bei welchem 60 Massen-% in der Verteilungskurve kleiner und 40 Massen-% größer oder gleich sind. D10 bezeichnet den Durchmesser, bei welchem 10 Massen-% in der Verteilungskurve kleiner und 90 Massen-% größer oder gleich sind.

Die Herstellung monodisperser Ionenaustauscher ist dem Fachmann prinzipiell bekannt. Man unterscheidet neben der Fraktionierung heterodisperser Ionenaustauscher durch Siebung im wesentlichen zwei Direktherstellungsverfahren nämlich das Verdüsen oder Jetting und das Seed-Feed-Verfahren beim Herstellen der Vorstufen, den monodispersen Perlpolymerisaten. Im Falle des Seed-Feed-Verfahrens wird ein monodisperser Feed eingesetzt, der seinerseits beispielsweise durch Siebung oder durch Jetting erzeugt werden kann.

Erfindungsgemäß werden monodisperse, amphotere Ionenaustauscher erhältlich durch Verdüsungsverfahren oder Jetting bevorzugt zur Abtrennung von organischen Carbonsäuren der Reihe Zitronensäure, Milchsäure oder Weinsäure aus Fermentationsbrühen eingesetzt.

Die den monodispersen amphoteren Ionenaustauschern zugrunde liegenden monodispersen Perlpolymerisate können nach bekannten Verfahren wie z.B. Fraktionieren, Verdüsen, Jetting oder nach der Seed-Feed-Technik hergestellt werden.

Das monodisperse Perlpolymerisat, die Vorstufe des Ionenaustauschers, kann beispielsweise hergestellt werden, indem man monodisperse, gegebenenfalls verkapselte Monomertropfen bestehend aus einer monovinylaromatischen Verbindung, einer polyvinylaromatischen Verbindung, einer Monovinylalkyl Verbindung sowie einem Initiator oder Initiatorgemisch und gegebenenfalls einem Porogen in wässriger Suspension zur Reaktion bringt. Um makroporöse Perlpolymerisate für die Herstellung makroporöser Ionenaustauscher zu erhalten, ist die Anwesenheit von Porogen zwingend erforderlich. Erfindungsgemäß können nämlich sowohl gelförmige als auch makroporöse monodisperse amphotere Ionenaustauscher für chromatographische Trennverfahren, insbesondere die Abtrennung von organischen Homo-, Di- oder Polycarbonsäuren aus wässrigen Lösungen, insbesondere Fermentationsbrühen, eingesetzt werden. In einer bevorzugten Ausführungsform der vorliegenden Erfindung werden monodisperse amphotere Ionenaustauscher eingesetzt zu deren Herstellung monodisperse Perlpolymerisate unter Einsatz mikroverkapselter Monomertröpfchen verwendet werden. Dem Fachmann sind die verschiedenen Herstellverfahren monodisperser Perlpolymerisate sowohl nach dem Jetting Prinzip als auch nach dem Seed-Feed Prinzip aus dem Stand der Technik bekannt. An dieser Stelle sei verwiesen auf US-A 4,444 961, EP-A 0 046 535, US-A 4,419,245 und WO 93/12167.

Als monovinylaromatische ungesättigte Verbindungen werden im Verfahrungsschritt a) Verbindungen wie Styrol, Vinyltoluol, Ethylstyrol, alpha-Methylstyrol, Chlorstyrol oder Chlormethylstyrol eingesetzt.

Als polyvinylaromatische Verbindungen (Vernetzer) werden Divinylgruppen-tragende aliphatische oder aromatische Verbindungen eingesetzt. Dazu gehören Divinylbenzol, Divinyltoluol, Trivinylbenzol, Ethylenglykoldimethacrylat, Trimethylolpropantrimethacrylat, Hexadien 1.5, Octadien 1.7, 2,5 -Dimethyl-1,5-hexadien sowie Divinylether. Die polyvinylaromatischen Verbindungen werden in Mengen von 0,5 Gew.-% bis 80 Gew.-%, bezogen auf die gesamte Monomermenge eingesetzt - bevorzugt 4-20 Gew.-%, besonders bevorzugt 5-10 Gew.-%

Geeignete Divinylether sind Verbindungen der allgemeinen Formel (I),

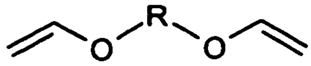

**(I)**

worin

R für einen Rest der Reihe $C_nH_{2n}$,$(C_mH_{2m}-O)_p-C_mH_{2m}$ oder $CH_2-C_6H_4-CH_2$ steht und n ≥2, m = 2 bis 8 und p ≥2 bedeuten.

Geeignete Polyvinylether im Falle n >2 sind Trivinylether von Glycerin, Trimethylolpropan oder Tetravinylether des Pentaerythrits.

Bevorzugt werden Divinylether von Ethylenglykol, Di-, Tetra- oder Polyethylenglykol, Butandiol oder Poly-THF oder die entsprechenden Tri- oder Tetravinylether eingesetzt. Besonders bevorzugt sind die Divinylether von Butandiol und Diethylenglykol wie sie in der EP-A 11 10 608 beschrieben sind.

Die alternativ zur gelförmigen Eigenschaft bevorzugt gewünschte makroporöse Eigenschaft wird den Ionenaustauschern im Verfahrensschritt a) gegeben. Die Zugabe von sogenanntem Porogen ist dazu zwingend erforderlich. Der Zusammenhang von Ionenaustauschern und ihrer makroporösen Struktur ist in der deutschen Auslegeschrift DE 1045102 (1957) und in der Deutschen Auslegeschrift DE 1113570 (1957) beschrieben. Als Porogen für die Herstellung erfindungsgemäß einzusetzender makroporöser Perlpolymerisate um makroporöse amphotere Ionenaustauscher zu erhalten sind vor allem organische Substanzen geeignet, die sich im Monomeren lösen, das Polymerisat aber schlecht lösen bzw. quellen. Beispielhaft seien aliphatische Kohlenwasserstoffe wie Octan, Isooctan, Decan, Isododecan. Weiterhin gut geeignet sind Alkohole mit 4 bis 10 Kohlenstoffatomen, wie Butanol, Hexanol oder Octanol.

Neben den monodispersen gelförmigen amphoteren Ionenaustauschern werden erfindungsgemäß bevorzugt also monodisperse amphotere Ionenaustauscher mit makroporöser Struktur zur Abtrennung von organischen Carbonsäuren der Reihe Zitronensäure, Milchsäure oder Weinsäure aus Fermentationsbrühen eingesetzt.

Der Begriff "makroporös" ist dem Fachmann bekannt. Einzelheiten werden beispielsweise in J.R. Millar et al J.Chem.Soc.1963, 218 beschrieben. Die makroporösen Ionenaustauscher besitzen ein durch Quecksilberporosimetrie ermitteltes Porenvolumen von 0,1 bis 2,2 ml/g, vorzugsweise von 0,4 bis 1,8 ml/g.

Die Funktionalisierung der nach Verfahrensschritt a) erhältlichen Perlpolymerisate zu monodispersen, amphoteren Ionenaustauschern erfolgt in Abwandlung des aus dem Stand der Technik bekannten Phthalimidverfahrens wie es beispielsweise in der US-A 7,053,129 beschrieben wird deren Inhalt von der vorliegenden Anmeldung vollumfänglich mit umfasst wird. Gegenstand der US-A 7,053,129 ist nämlich ein Verfahren zur Herstellung monodisperser Anionenaustauscher, indem man

a) Monomertröpfchen aus mindestens einer monovinylaromatischen Verbindung und mindestens einer polyvinylaromatischen Verbindung sowie gegebenenfalls einem Porogen und/oder gegebenenfalls einem Initiator oder einer Initiatorkombination, zu einem monodispersen, vernetzten Perlpolymerisat umsetzt,

b) dieses monodisperse, vernetzte Perlpolymerisat mit Phthalimidderivaten amidomethyliert,

c) das amidomethylierte Perlpolymerisat zu aminomethyliertem Perlpolymerisat umsetzt und

d) schließlich das aminomethylierte Perlpolymerisat, alkyliert.

Die im Verfahren der US-A 7,053,129 beschriebenen Parameter führen zu einer vollständigen Abspaltung des Phthalsäurerestes als Salz der Phthalsäure und damit zur Freilegung der $-(CH_2)_mNH_2$-Gruppe. Dies erfolgt durch Behandeln des phthalimidomethylierten, vernetzten Perlpolymerisates mit überstöchiometrischen Mengen wässriger oder alkoholischer Lösungen eines Alkalihydroxids, wie Natriumhydroxid oder Kaliumhydroxid.

Das Phthalimidverfahren ermöglicht somit die Herstellung Aminoalkylgruppen-haltiger vernetzter Perlpolymerisate mit einer Substitution der aromatischen Kerne größer I.

Bei den erfindungsgemäß einzusetzenden amphoteren Ionenaustauschern mit Phthalamidsäuregruppen erfolgt die Umsetzung von monodispersen Perlpolymerisaten mit Phthalimidderivaten zu phthalimidomethylierten Perlpolymerisaten im Verfahrensschritt b) nach dem in US-A 7,053,129 beschriebenen Verfahren.

Es wurde nun gefunden, dass im Gegensatz zu US-A 7,053,129 nur eine teilweise Freilegung der $-(CH_2)_mNH_2$-Gruppe mit gleichzeitiger Bildung von Phthalamidsäuregruppen im Verfahrensschritt c) erfolgt, wenn die phthalimidomethylierten Perlpolymerisate unterstöchiometrisch bzw. mit einem Unterschuss an Verseifungsreagenzien behandelt werden. Als Unterschuss im Sinne der vorliegenden Erfindung wird eine Menge an Verseifungsreagenzien, hier Säuren oder Laugen, bezeichnet, die nicht zur vollständigen Abspaltung des Phthalsäurerestes führt.

Dies erreicht man, indem bezogen auf die zur vollständigen Verseifung benötigte Menge an Verseifungsagenzien, die im Regelfall mindestens zweimal die Menge bezogen auf den Stickstoffgehalt im phthalimidomethylierten Perlpolymerisat beträgt, eine kleinere Menge Verseifungsreagenz einsetzt. Das Molverhältnis Stickstoff - im phthalimidomethyliertem Perpolymerisat - zu Verseifungsreagenz soll kleiner 1:2,0, bevorzugt 1:1,95 bis 1:0,1, besonders bevorzugt 1:1,9 bis 1:1,1 betragen

Pro ml phthalimidomethyliertes Perlpolymerisat werden im Verfahrensschritt c) bevorzugt 0,5 - 3 ml Verscifungsagenzien eingesetzt, besonders bevorzugt 0,8 - 1,5 ml Verseifungsagenzien pro ml phthalimidomethyliertes Perlpolymerisat, bezogen auf die oben angegebenen Molverhältnisse.

Die Behandlung des phthalimidomethylierten Perlpolymerisates mit den Verseifungsagenzien erfolgt im Verfahrensschritt c) bevorzugt im Temperaturbereich von 90°C bis 220°C, besonders bevorzugt im Bereich von 140°C bis 190°C.

Als Verseifungsagenzien werden im Verfahrensschritt c) bevorzugt Mineralsäuren, besonders bevorzugt Schwefelsäure, Salzsäure oder Alkalihydroxide, besonders bevorzugt Natronlauge oder Kaliumhydroxid - oder andere basische Verseifungsagenzien - eingesetzt.

Die Verseifungsagenzien werden in flüssiger Form, bevorzugt als wässrige Lösungen eingesetzt.

Bevorzugt wird Natronlauge eingesetzt.

Im Verfahrensschritt d) erfolgt die Herstellung der erfindungsgemäßen amphoteren Ionenaustauscher durch Umsetzung des Perlpolymerisates mit Aminomethylgruppen und Phthalamidsäuregruppen in Suspension mit Alkylierungsmitteln.

Bevorzugte Alkylierungsmittel sind Alkylhalogenide, Halogenalkohole, Alkylsulfate, Dialkylsulfate, Alkyloxide, Leuckart-Wallach-Reagenzien oder Kombinationen dieser Alkylierungsmittel untereinander bzw. nacheinander.

Besonders bevorzugt werden Chlormethan, Ethylenoxid, Propylenoxid, Chlorethanol sowie die Leuckart-Wallach-Reagenzien oder deren Kombination eingesetzt. Beispielhaft werden Leuckart-Wallach-Reagenzien in Organikum, VEB Deutscher Verlag der Wissenschaften, Berlin 1968, 8. Auflage, Seite 479 beschrieben.

Bezogen auf die in den erfindungsgemäßen Ionenaustauschern vorhandene Molmenge an Stickstoff werden bevorzugt 0,1 - 6 Mol Alkylierungsmittel, besonders bevorzugt 1 - 4 Mol Alkylierungsmittel angewandt.

Als Suspensionsmedium werden Wasser oder organische Solventien eingesetzt. Gegebenenfalls können aber auch in Abhängigkeit des gewünschten Produktes Basen zugesetzt werden. Bevorzugt wird Wasser eingesetzt. Als Basen kommen gegebenenfalls Natronlauge, Kalilauge oder basische, jedoch nicht nucleophile Amine in Frage.

Der Verfahrensschritt d) wird bei Temperaturen von 20 bis 150°C, bevorzugt von 40 bis 110°C durchgeführt. Verfahrensschritt d) wird bei Drücken von Normaldruck bis 6 bar, bevorzugt bei Normaldruck bis 4 bar durchgeführt.

Erfindungsgemäß für die Abtrennung von organischen Carbonsäuren der Reihe Zitronensäure, Milchsäure oder Weinsäure aus Fermentationsbrühen werden bevorzugt monodisperse, amphotere Ionenaustauscher hergestellt nach dem Phthalimidverfahren eingesetzt. Deren Substitutionsgrad beträgt bevorzugt bis zu 1,6, d.h. pro aromatischem Kern werden im statistischen Mittel bis zu 1,6 Wasserstoffatome durch Methylphthalimidgruppen substituiert. Nach dem Phthalimidverfahren mit anschließender unterstöchiometrischer Verseifung können daher hoch kapazitive, nachvernetzungsfreie amphotere Ionenaustauscher mit Phthalamidsäuregruppen und basischen Gruppen hergestellt werden, die zur Abtrennung von organischen Carbonsäuren der Reihe Zitronensäure, Milchsäure oder Weinsäure aus Fermentationsbrühen eingesetzt werden.

Isolieren im Sinne der vorliegenden Erfindung bedeutet im Herstellverfahrensschritt c) und d) ein Abtrennen des Ionenaustauschers aus der wässrigen Suspension und dessen Reinigung. Die Abtrennung erfolgt nach den für den Fachmann bekannten Maßnahmen wie Dekantieren, Zentrifugieren, Filtrieren. Die Reinigung erfolgt durch Waschen mit beispielsweise entionisiertem Wasser und kann eine Klassierung zur Abtrennung von Feinanteilen bzw. Grobanteilen beinhalten. Gegebenenfalls kann der erhaltene amphotere Ionenaustauscher getrocknet werden, bevorzugt durch reduzierten Druck und/oder besonders bevorzugt bei Temperaturen zwischen 20°C und 180°C.

Sowohl die amphoteren Ionenaustauscher erhältlich nach Verfahrensschritt c) als auch die amphoteren Ionenaustauscher erhältlich nach Verfahrensschritt d) sind für die erfindungsgemäße Verwendung zur Abtrennung von organischen Carbonsäuren der Reihe Zitronensäure, Milchsäure oder Weinsäure aus Fermentationsbrühen geeignet. Erfindungsgemäß hierfür besonders geeignet sind die amphoteren Ionenaustauscher erhältlich nach Verfahrensschritt c).

Die erfindungsgemäß einzusetzenden amphoteren Ionenaustauscher werden zu diesem Zweck bevorzugt in für ihre Aufgaben geeigneten Vorrichtungen eingesetzt.

**Bestimmung der Menge an basischen Aminomethylgruppen im aminomethylierten, vernetzten Polystyrol Perlpolymerisat**

100 ml eines aminomethylierten Perlpolymerisates werden auf dem Stampfvolumeter eingerüttelt und anschließen mit voll entsalztem Wasser in eine Glassäule gespült. In 1 Stunde und 40 Minuten werden 1000 ml 2 gew.-%ige Natronlauge überfiltriert. Anschließend wird voll entsalztes Wasser überfiltriert bis 100 ml Eluat mit Phenolphthalein versetzt einen Verbrauch an 0,1 n (0,1 normaler) Salzsäure von höchstens 0,05 ml haben.

50 ml dieses Harzes werden in einem Becherglas mit 50 ml voll entsalztem Wasser und 100 ml In Salzsäure versetzt. Die Suspension wird 30 Minuten gerührt und anschließend in eine Glassäule gefüllt. Die Flüssigkeit wird abgelassen. Es werden weitere 100 ml In Salzsäure über das Harz in 20 Minuten filtriert. Anschließend werden 200 ml Methanol überfiltriert. Alle Eluate werden gesammelt und vereinigt und mit In Natronlauge gegen Methylorange titriert.

Die Menge an Aminomethylgruppen in 1 Liter aminomethyliertem Harz errechnet sich nach folgender Formel: $(200 - V) \cdot 20$ = mol Aminomethylgruppen pro Liter Harz, worin V für Volumen der bei der Titration verbrauchten 1 n Natronlauge steht.

**Bestimmung der Menge an Phthalamidsäuregruppen im amphoteren Ionenaustauscher**

5000 ml einer wässrigen Lösung, die 392,9 Gramm $CuSO_4 \cdot 5\ H_2O$ enthält, werden hergestellt.

In eine Glassäule werden 60 ml amphoterer Ionenaustauscher eingefüllt. Innerhalb von 2 Stunden werden 50 ml 4 gew.-%ige Natronlauge überfiltriert. Dann werden 250 ml voll entsalztes Wasser innerhalb von 1 Stunde überfiltriert.

Von der erhaltenen Harzmenge werden 50 ml in eine Glassäule eingefüllt. Innerhalb von 4 Stunden werden 1000 ml der wässrigen Kupfersulfatlösung über das Harz filtriert. Das Eluat wird aufgefangen. Anschließend werden 100 ml voll entsalztes Wasser über das Harz filtriert. Das Eluat wird aufgefangen. Beide Eluate werden vereinigt. In dem vereinigten Eluat wird der Gehalt an Kupfer analysiert. Die Differenz zwischen der aufgegebenen Kupfermenge und der im Gesamteluat analysierten Kupfermenge ist gleich der vom Harz aufgenommenen Kupfermenge. Die von 50 ml amphoterem Ionenaustauscher aufgenommene Molmenge an Kupfer ist äquivalent der Molmenge an Phthalamidsäuregruppen in 50 ml amphoterem Ionenaustauscher.

50 ml amphoterer Ionenaustauscher enthalten x mol Phthalamidsäuregruppen.

1000 ml amphoterer Ionenaustauscher enthalten 40 x x mol Phthalamidsäuregruppen.

VE-Wasser oder voll entsalztes Wasser im Sinne der vorliegenden Erfindung ist gekennzeichnet, indem es eine Leitfähigkeit von 0,1 bis 10 µS besitzt, wobei der Gehalt an gelösten oder ungelösten Metallionen nicht größer als 1 ppm, bevorzugt nicht größer als 0,5 ppm für Fe, Co, Ni, Mo, Cr, Cu als individuelle Komponenten ist und nicht größer als 10 ppm, bevorzugt nicht größer als 1 ppm für die Summe der genannten Metalle ist.

**Beispiele:**

**Beispiel 1:** Herstellung eines amphoteren Ionenaustauschers mit Phthalamidsäuregruppen und primären Aminogruppen

1a) Herstellung eines monodispersen, makroporösen Perlpolymerisates auf der Basis von Styrol, Divinylbenzol und Ethylstyrol

In einem 10 1 Glasreaktor wurden 3000 g voll entsalztes Wasser vorgelegt und eine Lösung aus 10 g Gelatine, 16 g di-Natriumhydrogenphosphatdodekahydrat und 0,73 g Resorcin in 320 g VE-Wasser hinzugefüllt und durchmischt. Die Mischung wurde auf 25°C temperiert. Unter Rühren wurde anschließend eine Mischung aus 3200 g mikroverkapselter Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan (technisches Isomerengemisch mit hohem Anteil

an Pentamethylheptan) gegeben, wobei die Mikrokapsel aus einem mit Formaldehyd gehärteten Komplexkoazervat aus Gelatine und einem Copolymer aus Acrylamid und Acrylsäure bestand, und 3200 g wässriger Phase mit einem pH-Wert von 12 zugesetzt. Die mittlere Teilchengröße der Monomertröpfchen betrug 260 μm.

Der Ansatz wurde unter Rühren durch Temperaturerhöhung nach einem Temperaturprogramm bei 25°C beginnend und bei 95°C endend auspolymerisiert. Der Ansatz wurde abgekühlt, über ein 32 μm-Sieb gewaschen und anschließend im Vakuum bei 80°C getrocknet. Man erhielt 1893 g eines kugelförmigen Polymerisates mit einer mittleren Teilchengröße von 250 μm, enger Teilchengrößenverteilung und glatter Oberfläche.

Das Polymerisat war in der Aufsicht kreidig weiß und wies eine Schüttdichte von ca. 350 g/l auf.

1 b) Herstellung eines amidomethylierten Perlpolymerisates

Bei Raumtemperatur wurden 2825 ml Dichlorethan, 529,7 g Phthalimid und 368,7 g 29,9 gew.-%iges Formalin vorgelegt. Der pH Wert der Suspension wurde mit Natronlauge auf 5,5 bis 6 eingestellt. Anschließend wurde das Wasser destillativ entfernt. Dann wurden 38,8 g Schwefelsäure zudosiert. Das entstehende Wasser wurde destillativ entfernt. Der Ansatz wurde abgekühlt. Bei 30°C werden 141,9 g 65 %iges Oleum und anschließend 424,4 g monodisperses Perlpolymerisat, hergestellt nach Verfahrensschritt 1a) eindosiert. Die Suspension wurde auf 70°C erhitzt und weitere 6 Stunden bei dieser Temperatur gerührt. Die Reaktionsbrühe wurde abgezogen, voll entsalztes Wasser wurde hinzudosiert und Restmengen an Dichlorethan wurden destillativ entfernt.
Ausbeute an amidomethyliertem Perlpolymerisat : 1920 ml

Elementaranalytische Zusammensetzung:

| | |
|---|---|
| Kohlenstoff: | 77,1 Gew.-%; |
| Wasserstoff: | 5,3 Gew.-%; |
| Stickstoff: | 4,8 Gew.-%; |
| Rest: | Sauerstoff. |

1c) Umsetzung des amidomethylierten Perlpolymerisates zu einem amphoteren Ionenaustauschers mit Phthalamidsäuregruppen und primären Aminogruppen

Das Molverhältnis NaOH der Verseifungsnatronlauge zu Stickstoff im amidomethylierten Perlpolymerisat betrug 1,9 zu 1

Zu 1900 ml amidomethyliertem Perlpolymerisat aus 1b) wurden 321,1 ml 50 gew.-%ige Natronlauge und 1389 ml voll entsalztes Wasser bei Raumtemperatur zudosiert. Die Suspension wurde in 2 Stunden auf 180°C erhitzt und 8 Stunden bei dieser Temperatur gerührt. Das erhaltene Perlpolymerisat wurde mit voll entsalztem Wasser gewaschen.
Ausbeute : 1920 ml
Bestimmung der Menge an basischen Gruppen : 1,42 mol/ Liter Harz
Bestimmung der Menge an Phthalamidsäuregruppen : 0,816 mol/ Liter Harz

**<u>Beispiel 2:</u>** Herstellung eines amphoteren Ionenaustauschers mit Phthalamidsäuregruppen und tertiären Aminogruppen

2b) Herstellung eines amidomethylierten Perlpolymerisates

Bei Raumtemperatur wurden 2354 ml Dichlorethan, 441,4 g Phthalimid und 306,3 g 30,0 gew.-%iges Formalin vorgelegt. Der pH Wert der Suspension wurde mit Natronlauge auf 5,5 bis 6 eingestellt. Anschließend wurde das Wasser destillativ entfernt. Dann wurden 32,4 g Schwefelsäure zudosiert. Das entstehende Wasser wurde destillativ entfernt. Der Ansatz wurde abgekühlt. Bei 30°C wurden 118,2 g 65 %iges Oleum und anschließend 318,3 g monodisperses Perlpolymerisat, hergestellt nach Verfahrensschritt 1a) eindosiert. Die Suspension wurde auf 70°C erhitzt und weitere 6 Stunden bei dieser Temperatur gerührt. Die Reaktionsbrühe wurde mittels Vakumm abgezogen, voll entsalztes Wasser wurde hinzudosiert und Restmengen an Dichlorethan wurden destillativ entfernt.
Ausbeute an amidomethyliertem Perlpolymerisat : 1540 ml

Elementaranalytische Zusammensetzung:

| | |
|---|---|
| Kohlenstoff: | 77,1 Gew.-%; |
| Wasserstoff: | 4,9 Gew.-%; |
| Stickstoff: | 5,0 Gew.-%; |

2c) Umsetzung des amidomethylierten Perlpolymerisates zu einem amphoteren Ionenaustauscher mit Phthalamidsäuregruppen und primären Aminogruppen

Das Molverhältnis NaOH der Verseifungsnatronlauge zu Stickstoff im amidomethylierten Perlpolymerisat betrug 1,9 : 1

Zu 1510 ml amidomethyliertem Perlpolymerisat aus 2a) wurden 257,1 ml 50 gew.-%ige Natronlauge und 1555 ml voll entsalztes Wasser bei Raumtemperatur zudosiert. Die Suspension wurde in 2 Stunden auf 180°C erhitzt und 8 Stunden bei dieser Temperatur gerührt. Das erhaltene Perlpolymerisat wurde mit voll entsalztem Wasser gewaschen.
Ausbeute an aminomethyliertem Perlpolymerisat : 1750 ml

Elementaranalytische Zusammensetzung:

| | |
|---|---|
| Stickstoff: | 6,8 Gew.-% |
| Kohlenstoff: | 76,6 Gew.-%; |
| Wasserstoff: | 6,7 Gew.-%; |
| Sauerstoff: | 11,3 Gew.-% |
| Natrium : | 0,17 Gew.-% |
| Bestimmung der Menge an basischen Gruppen : | 0,97 mol/ Liter Harz |
| Bestimmung der Menge an Phthalamidsäuregruppen : | 0,436 mol/ Liter Harz |

2d) Umsetzung des amidomethylierten Perlpolymerisates zu einem amphoteren Ionenaustauscher mit Phthalamidsäuregruppen und tertiären Dimethylaminogruppen.

In einen Reaktor wurden bei Raumtemperatur 653 ml voll entsalztes Wasser vorgelegt. Dazu wurden 435 ml Perlpolymerisat aus Beispiel 2b) und danach 93 Gramm 30 gew.-%ige wässrige Formalinlösung dosiert. Die Suspension wurde auf 40°C erwärmt. Durch Dosierung von 85 gew.-%iger Ameisensäure wurde der pH Wert der Suspension auf pH 3 eingestellt. Dann wurde auf 55°C erhitzt und weitere 30 Minuten bei 55°C gerührt. Anschließend wurde auf 70°C erhitzt und weitere 30 Minuten bei 70°C gerührt. Es wurde auf 80°C erhitzt und weitere 30 Minuten bei 80°C gerührt. Anschließend wurde auf 97°C erhitzt. Während der gesamten Aufheizphase wurde der pH Wert durch Dosierung von Ameisensäure bei pH 3 gehalten. Nach 30 minütigem Rühren bei 97°C wurde der pH Wert durch Dosierung von 50 gew.-%iger Schwefelsäure auf pH 2 eingestellt. Es wurde 30 Minuten bei pH 2 gerührt. Anschließend wurde durch Dosierung von 50 gew.-%iger Schwefelsäure der pH Wert auf pH 1 eingestellt und weitere 8,5 Stunden bei diesem pH Wert und 97°C gerührt.
Insgesamt wurden 50 Gramm Ameisensäure 85 % ig dosiert.

Nach dem Abkühlen der Suspension wurde das erhaltene Perlpolymerisat auf einem Sieb abfiltriert und mit voll entsalztem Wasser gewaschen.
Ausbeute : 520 ml

Das Perlpolymerisat wurde in eine Säule gefüllt. Von oben wurden zunächst 2000 ml 4 gew.-%ige Natronlauge, anschließend 2000 ml voll entsalztes Wasser überfiltriert.
Ausbeute : 420 ml

Elementaranalytische Zusammensetzung:

| | |
|---|---|
| Stickstoff: | 6,9 Gew.-% |
| Kohlenstoff: | 80,2 Gew.-%; |
| Wasserstoff: | 7,8 Gew.-%; |
| Sauerstoff: | 9,8 Gew.-% |
| Natrium: | 0,17 Gew.-% |
| Bestimmung der Menge an basischen Gruppen : | 0,98 mol/ Liter Harz |

**Beispiel 3:** Herstellung eines amphoteren Ionenaustauschers mit Phthalamidsäuregruppen und quartären Ammoniumgruppen

Umsetzung des amphoteren Ionenaustauscher mit Phthalamidsäuregruppen und primären Aminogruppen zu einem amphoteren Ionenaustauschers mit Phthalamidsäuregruppen und quartären Ammoniumgruppen

In einen Reaktor wurden bei Raumtemperatur 640 ml voll entsalztes Wasser und 400 ml Perlpolymerisat aus Beispiel 2b) vorgelegt. Dazu wurden 74,5 Gramm 50 gew.-%ige Natronlauge dosiert. Anschließend wurden 25, 5 Gramm Chlormethyl dosiert. Die Suspension wurde auf 40°C erhitzt und unter Rühren weitere 16 Stunden bei dieser Temperatur

gerührt.

Nach dem Abkühlen der Suspension wurde das erhaltene Perlpolymerisat auf einem Sieb abfiltriert und mit voll entsalztem Wasser gewaschen.

Ausbeute: 440 ml

Elementaranalytische Zusammensetzung:

| | |
|---|---|
| Stickstoff: | 6,3 Gew.-% |
| Kohlenstoff: | 76,3 Gew.-%; |
| Wasserstoff: | 7,2 Gew.-%; |
| Sauerstoff: | 11,9 Gew.-% |

**Beispiel 4:** Auftrennung eines wässrigen Gemisches von Glucose und Zitronensäure mit einem amphoteren Ionenaustauscher, der Phthalamidsäuregruppen und primäre Aminogruppen enthält

**Vorbereitung:**

500 ml des Harzes erhältlich aus Beispiel 1c) wurden in eine Glassäule filtriert. Über das Harz wurden 600 ml 10 gew.-%ige wässrige Schwefelsäure filtriert und anschließend mit voll entsalztem Wasser neutral gewaschen. Danach lag das Harz in der Sulfatform vor.

Das Harz wurde in die auf 70°C vorgeheizte und auf dem Vibrationstisch platzierte Glassäule (Durchmesser 25 mm, Länge 1000 mm), die durch einen Heizmantel beheizt wurde, gefüllt. Füllhöhe des Harzes in der Säule 81 cm = 400 ml Harz

Dabei wurden eventuell entstehende Luftblasen durch die Vibration verstärkt nach oben getrieben. Die Säule wurde bis zu einer Höhe von 81 cm (=400 ml Harz) befüllt.

Sobald das Harz nicht mehr weiter verdichtete, wurde der Zuführungskolben eingesetzt. Es wurde darauf geachtet, dass überstehende Luft durch die Zuleitung des Kolbens entweichen konnte. Es wurden nun 4 Bettvolumen Schwefelsäure (w = 0,2%) über das Harz gepumpt.

**Chromatographie:**

Mit der Injektionsspritze wurden 5 ml einer Lösung aus 40 Gew.-% Zitronensäure; 10 Gew.-% Glukose; 1 Gew.-% Schwefelsäure und 49 Gew.-% Wasser in die Zuleitung der Säule gespritzt.

Die Leitung wurde an die Schlauchpumpe angeschlossen und das Gemisch wurde mit Schwefelsäure (W = 0,2 %) bei 25 ml/min durch das Harzbett gepumpt. Der Ablauf wurde in Fraktionen zu 25 ml (=1 in Takt) aufgefangen. Die einzelnen Fraktionen wurden anschließend per HPLC auf ihren Gehalt an Glukose und Citrat untersucht.

Fig. 1 zeigt eine Apparatur für Beispiel 4, worin A = Schlauchpumpe, B = Zufiihrungskolben, C = Heizmantel, D = Harzpackung, E = Sinterplatte und F = Fraktionssammler bedeuten.

Fig. 2 zeigt die Auftrennung eines Glucose-Zitronensäuregemisches mit dem amphoteren Ionenaustauscher aus Beispiel 1c) worin R = Resolution, t = Zeit in Minuten bedeuten.

Überraschenderweise führt der Einsatz der erfindungsgemäßen Ionenaustauscher zu einer scharfen Trennung der einzelnen Komponenten aus dem Glucose-Zitronensäuregemisch, wobei im Vorlauf (8-16 Min.) die Glucose aufgefangen wird und im Nachlauf dann erst die Zitronensäure die Säule verlässt (16-30 Min.).

**Patentansprüche**

**1.** Verwendung amphoterer Ionenaustauscher, die sowohl Phthalamidgruppen der Formel (I)

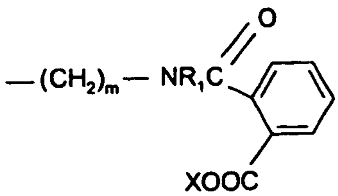

(I)

als auch $-(CH_2)_mNR_1R_2$-Gruppe und/oder gegebenenfalls $-(CH_2)_mNR_1R_2R_3$-Gruppen aufweisen, wobei m für eine ganze Zahl von 1 bis 4 steht, $R_1$, $R_2$, $R_3$ jeweils unabhängig voneinander für Wasserstoff, $-CH_3$, $-CH_2CH_3$, $-CH_2CH_2CH_3$, Benzyl , $-OCH_2CH_3$ oder $-CH_2CH_2OH$ stehen und X für H oder Na oder K steht, zur Abtrennung von organischen Carbonsäuren der Reihe Zitronensäure, Milchsäure oder Weinsäure aus Fermentationsbrühen.

2. Verwendung gemäß Anspruch 1, **dadurch gekennzeichnet, dass** $R_1$, $R_2$ und $R_3$ jeweils nur für Wasserstoff stehen.

3. Verwendung gemäß der Ansprüche 1 oder 2, **dadurch gekennzeichnet, dass** die amphoteren Ionenaustauscher eine monodisperse oder heterodisperse Teilchengrößenverteilung aufweisen.

4. Verwendung gemäß Anspruch 3, **dadurch gekennzeichnet, dass** die monodisperse Teilchengrößenverteilung durch Verdüsen oder nach der Seed-Feed-Technik erzielt wird.

5. Verwendung gemäß der Ansprüche 1 bis 4, **dadurch gekennzeichnet, dass** der amphotere Ionenaustauscher in von einer zu behandelnden Flüssigkeit durchströmbare Vorrichtungen, bevorzugt Filtrationseinheiten, besonders bevorzugt Adsorptionsbehälter, insbesondere Filteradsorptionsbehälter, die mit den erfindungsgemäßen amphoteren Ionenaustauschern gefüllt sind, eingesetzt wird.

## Claims

1. Use of amphoteric ion exchangers which possess not only phthalamide groups of the formula (I)

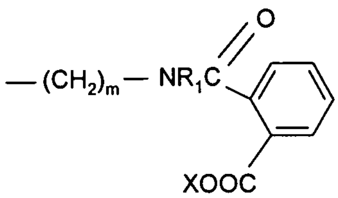

(I)

but also $-(CH_2)_mNR_1R_2$ groups and/or if appropriate $-(CH_2)_mNR_1R_2R_3$ groups, wherein m is an integer from 1 to 4 and $R_1$, $R_2$, $R_3$ in each case independently of one another are hydrogen, $-CH_3$, $-CH_2CH_3$, $-CH_2CH_2CH_3$, benzyl, $-OCH_2CH_3$ or $CH_2CH_2OH$ and X is H or Na or K, for separating off organic carboxylic acids from the series comprising citric acid, lactic acid and tartaric acid from fermentation broths.

2. Use according to Claim 1, **characterized in that** $R_1$, $R_2$ and $R_3$ are in each case only hydrogen.

3. Use according to Claims 1 and 2, **characterized in that** the amphoteric ion exchangers have a monodisperse or heterodisperse particle size distribution.

4. Use according to Claim 3, **characterized in that** the monodisperse particle size distribution is achieved by jetting or by the seed-feed technique.

5. Use according to Claims 1 to 4, **characterized in that** the amphoteric ion exchanger is used in devices through which a liquid to be treated can flow, preferably filtration units, particularly preferably adsorption vessels, in particular filter adsorption vessels, which are packed with the amphoteric ion exchangers according to the invention.

## Revendications

1. Utilisation d'échangeurs d'ions amphotères, qui présentent des groupes phtalamide de formule (I)

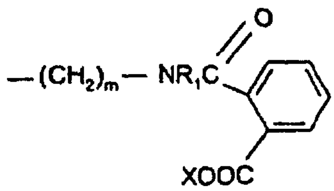

(I)

ainsi que des groupes $-(CH_2)_mNR_1R_2$ et/ou le cas échéant des groupes $-(CH_2)_mNR_1R_2R_3$, où m représente un nombre entier de 1 à 4, $R_1$, $R_2$, $R_3$ représentent à chaque fois, indépendamment l'un de l'autre, hydrogène, $-CH_3$, $-CH_2CH_3$, $-CH_2CH_2CH_3$, benzyle, $-OCH_2CH_3$ ou $-CH_2CH_2OH$ et X représente H ou Na ou K, pour la séparation d'acides carboxyliques organiques de la série acide citrique, acide lactique ou acide tartrique de bouillons de fermentation.

2. Utilisation selon la revendication 1, **caractérisée en ce que** $R_1$, $R_2$ et $R_3$ représentent à chaque fois uniquement hydrogène.

3. Utilisation selon les revendications 1 ou 2, **caractérisée en ce que** les échangeurs d'ions amphotères présentent une répartition monodispersée ou hétérodispersée des grosseurs des particules.

4. Utilisation selon la revendication 3, **caractérisée en ce que** la répartition monodispersée des grosseurs des particules est obtenue par vaporisation ou par la technique d'ensemencement-alimentation (Seed-Feed).

5. Utilisation selon les revendications 1 à 4, **caractérisée en ce que** les échangeurs d'ions amphotères sont utilisés dans des dispositifs pouvant être traversés par un liquide à traiter, de préférence des unités de filtration, de manière particulièrement préférée des récipients d'adsorption, en particulier des récipients d'adsorption à filtre, qui sont remplis avec les échangeurs d'ions amphotères selon l'invention.

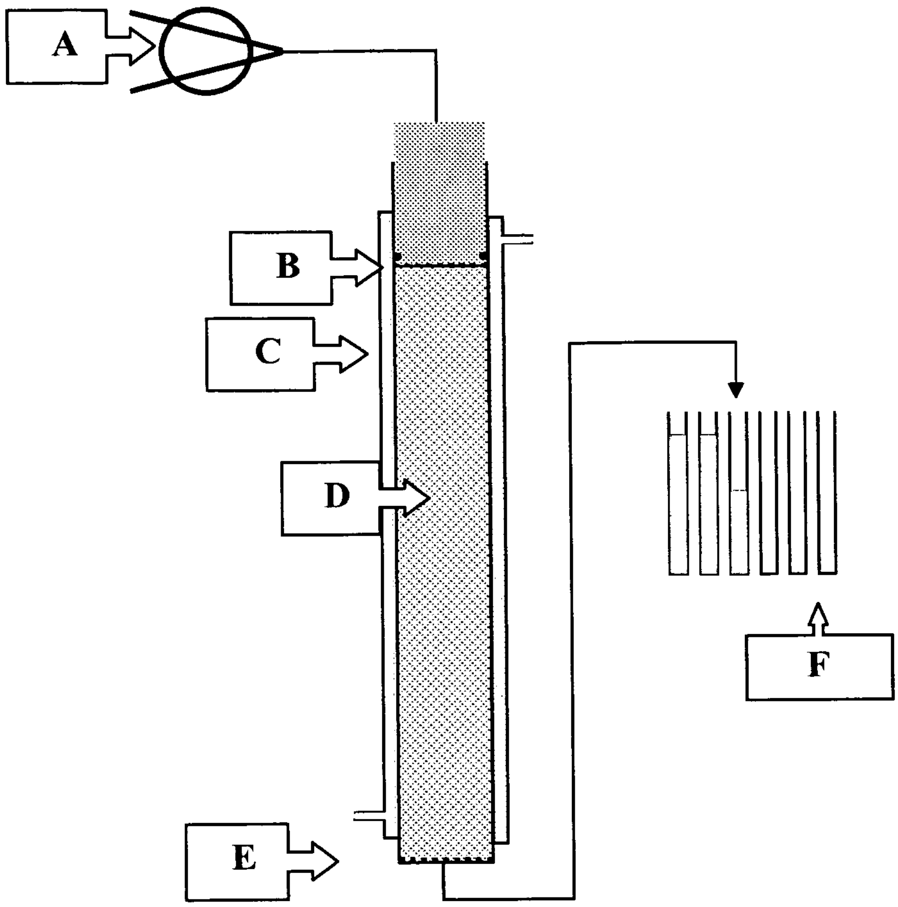


Fig. 1

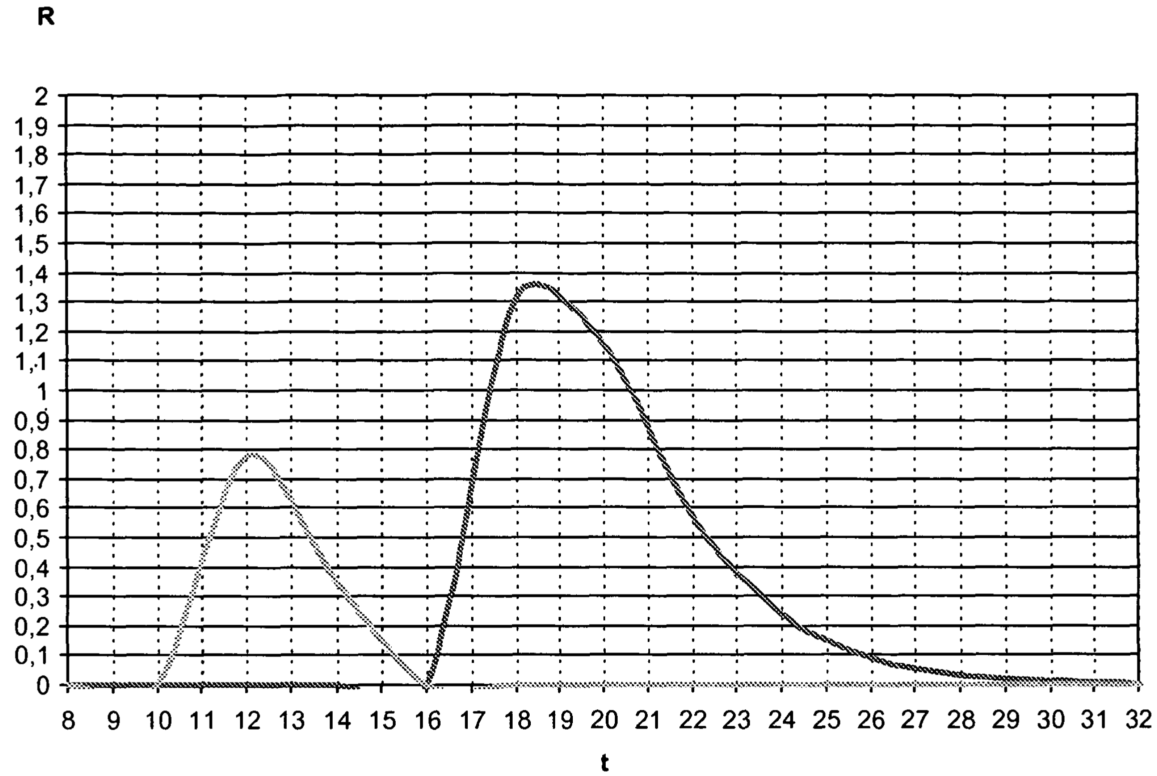
R
2
1,9
1,8
1,7
1,6
1,5
1,4
1,3
1,2
1,1
1
0,9
0,8
0,7
0,6
0,5
0,4
0,3
0,2
0,1
0
8 9 10 11 12 13 14 15 16 17 18 19 20 21 22 23 24 25 26 27 28 29 30 31 32
t

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10353534 A
- US 4232125 A
- EP 1078688 A
- US 7241918 A
- US 5068419 A
- US 4444961 A
- EP 0046535 A
- US 4419245 A
- WO 9312167 A
- EP 1110608 A
- DE 1045102
- DE 1113570
- US 7053129 A


### In der Beschreibung aufgeführte Nicht-Patentliteratur


- Helfferich Ionenaustauscher. Verlag Chemie, vol. 1, 52
- **Bolto ; Pawlowski.** Wastewater Treatment. 1986, 5
- **Stach.** *Angewandte Chemie,* 1951, vol. 63, 263
- **Bolto ; Pawlowski.** Wastewater treatment. Ion Exchange, 1987, 51 ff
- **J.R. Millar et al.** *J.Chem.Soc.,* 1963, 218